# FASCICULE DE BREVET EUROPEEN

(11) **EP 3 587 224 B1**
(45) Date de publication et mention de la délivrance du brevet: **03.03.2021**
(21) Numéro de dépôt: 19169264.9
(22) Date de dépôt: 15.04.2019
(51) Int. Cl.: B62D 43/00, B62D 43/04

(54) **DISPOSITIF DE FIXATION D'UNE ROUE DE SECOURS D'UN VÉHICULE AUTOMOBILE**
BEFESTIGUNGSVORRICHTUNG EINES RESERVERADS EINES KRAFTFAHRZEUGS
DEVICE FOR ATTACHING A SPARE WHEEL OF A MOTOR VEHICLE

(30) Priorité: 29.06.2018 FR 1855944
(43) Date de publication de la demande: 01.01.2020
(73) Titulaire: RENAULT s.a.s., 92100 Boulogne-Billancourt (FR)
(72) Inventeur: BOUAL, Francois, 78280 GUYANCOURT (FR); DESCHAMPS, Jean-Jacques, 78370 PLAISIR (FR)

(56) Documents cités:
- FR-A1- 2 924 398
- FR-A1- 3 056 548
- JP-U- S59 177 566

## Description

La présente invention concerne un dispositif de fixation d'une roue de secours d'un véhicule automobile comportant une structure d'accueil de la roue et deux moyens d'accroche aptes à coopérer avec au moins un élément récepteur solidaire de la structure du véhicule, ledit dispositif présentant une structure filaire comportant un premier fil configuré sensiblement en forme de U se terminant respectivement par lesdits deux moyens d'accroche.

On connaît couramment un tel dispositif filaire, appelé communément panier de roue de secours, monté basculant sous le plancher d'un véhicule, qui permet le logement et la retenue d'une roue de secours, avec des moyens légers et peu encombrants. En outre, le montage du panier sous la structure du véhicule est aisé.

Toutefois, un inconvénient découlant de cette facilité de montage d'un tel dispositif, est le risque de se démonter par rapport à son récepteur, les moyens d'accroche pouvant se désengager dudit récepteur lors d'un effort trop important sur l'arrière de la roue de secours lorsqu'elle est en position sur le panier, ou au moment de sa mise en position sur le panier.

Afin de remédier à cet inconvénient, il a été proposé dans la demande de brevet FR2924398, un dispositif de fixation d'une roue de secours présentant une structure filaire comprenant un fil sensiblement en forme de U dont les deux extrémités constituent respectivement lesdits deux moyens d'accroche, et lesdits moyens d'accroche étant de formes courbes et distinctes, soit formés d'un premier crochet et d'un deuxième crochet et dont la forme du premier diffère de la forme du deuxième. En particulier le premier crochet a une forme de courbe de rayon de courbure essentiellement constant, et l'autre crochet présente successivement une portion courbe, une portion rectiligne et une portion finale sensiblement perpendiculaire à ladite portion rectiligne.

Ce dispositif peut néanmoins présenter l'inconvénient d'être facilement démontable soit lors de manipulation de la roue, voire de se décrocher seul lorsque le véhicule roule suite à un mauvais remontage après une opération de changement de roue, soit encore par un individu malveillant souhaitant par exemple subtiliser la roue de secours du véhicule sur roues (c'est-à-dire dans son utilisation habituelle).
De plus, on observe souvent un bruit important provenant des vibrations du panier de roue lorsque le véhicule roule le panier vide (sans la roue de secours).

L'invention a pour but de résoudre au moins en partie les inconvénients précités d'un dispositif de fixation de roue de secours de type filaire, tout en visant un montage du dispositif qui soit facile pour l'opérateur.

A cet effet l'invention fournit un dispositif de fixation d'une roue de secours d'un véhicule automobile, apte à se solidariser à la caisse du véhicule, comportant une structure filaire d'accueil de la roue munie d'au moins deux moyens d'accroche aptes à s'accrocher respectivement à un élément récepteur solidaire du véhicule pour le montage basculant de ladite structure filaire autour d'un axe passant par les au moins deux moyens d'accroche permettant des opérations d'ouverture ou de fermeture dudit dispositif. Ladite structure filaire comprend au moins un fil sensiblement en forme de U dont les deux extrémités sont prolongées respectivement par lesdits moyens d'accroche, et lesdits moyens d'accroche se présentent sous forme respectivement d'un premier crochet et d'un deuxième crochet de formes distinctes l'une de l'autre. Selon l'invention lesdits crochets sont configurés et dimensionnés de façon à ce que ladite structure filaire ne puisse être montée qu'en accrochant ledit premier crochet en premier puis ledit deuxième crochet, et qu'au moins ledit fil en U de ladite structure filaire est élastiquement déformable pour permettre l'accrochage dudit deuxième moyen d'accroche, soit dudit deuxième crochet.
Ladite structure filaire comprend de préférence un autre fil se croisant avec ledit premier fil en U, les deux fils étant solidarisés l'un à l'autre.

De préférence selon l'invention, ledit premier crochet est configuré et dimensionné de façon à ce que ledit premier crochet s'accroche à son élément récepteur en lui faisant effectuer une rotation à 180 degrés autour d'un axe sensiblement vertical, suivie d'une rotation à 90 degrés selon un axe sensiblement horizontal.

Selon un mode de réalisation préféré de l'invention, ledit premier moyen d'accroche comprend une première portion courbe et une deuxième portion courbe, lesdites portions courbes étant orientées suivant des plans sensiblement perpendiculaires entre eux, ladite première portion courbe permettant la rotation d'environ 180 degrés dudit premier crochet autour d'un axe sensiblement vertical formé par une portion de contour de l'élément récepteur solidaire du véhicule, et ladite deuxième portion courbe permettant la rotation d'environ 90 degrés dudit premier crochet autour d'un axe sensiblement horizontal formé par une portion de contour de l'élément récepteur solidaire du véhicule.

En particulier selon l'invention, ledit premier moyen d'accroche comprend successivement, en partant de l'extrémité dudit crochet qu'il forme, une portion terminale rectiligne, ladite première portion courbe puis ladite deuxième portion courbe, et cette dernière formant un coude dans le prolongement de l'extrémité d'une première branche dudit fil en U.

Selon un mode préféré de l'invention, ledit deuxième moyen d'accroche comprend successivement, en partant de l'extrémité dudit crochet qu'il forme, une portion terminale rectiligne, une première portion courbe, une portion rectiligne, puis une deuxième portion courbe, cette dernière formant un coude dans le prolongement de l'extrémité de la deuxième branche dudit fil en U.

De préférence selon l'invention, ledit premier moyen d'accroche est formé par une partie recourbée de fil en une extrémité dudit fil en U de ladite structure filaire et ledit deuxième moyen d'accroche est formé par une autre partie recourbée en l'autre extrémité dudit fil en U.

L'invention a aussi pour objet un procédé de montage d'un dispositif de fixation d'une roue de secours d'un véhicule automobile en le solidarisant à la caisse du véhicule, ledit dispositif comportant une structure filaire d'accueil de la roue munie d'au moins deux moyens d'accroche s'accrochant respectivement à un élément récepteur solidaire du véhicule rendant basculante ladite structure filaire autour d'un axe passant par les au moins deux moyens d'accroche pour permettre des opérations d'ouverture ou de fermeture dudit dispositif. Selon l'invention, dans ce procédé on utilise un dispositif de fixation de roue tel que décrit précédemment, et dans une étape, ledit premier moyen d'accroche est accroché à son élément récepteur respectif en lui faisant effectuer une rotation à 180 degrés autour d'un axe sensiblement vertical, formé par le pourtour vertical de la partie inférieure dudit élément récepteur, puis une rotation à 90 degrés selon un axe sensiblement horizontal, formé par une portion de contour dudit élément récepteur, et dans une étape suivante ledit deuxième moyen d'accroche est accroché à son élément récepteur respectif grâce à la déformation élastique d'au moins le fil en U de la structure filaire dudit dispositif.

En particulier dans le procédé selon l'invention, ledit deuxième moyen d'accroche est accroché en fléchissant au moins ledit fil en U de la structure filaire au moins au niveau dudit deuxième moyen d'accroche, puis en introduisant ledit deuxième moyen d'accroche dans son élément récepteur, puis en le déplaçant suivant une translation verticale et vers le bas dans ledit élément récepteur, de sorte que ledit deuxième moyen d'accroche vient s'accrocher audit élément récepteur.

L'invention a aussi pour objet un véhicule automobile comprenant un dispositif de fixation d'une roue de secours solidarisé à la caisse dudit véhicule, comportant une structure filaire d'accueil de la roue munie d'au moins deux moyens d'accroche accrochés respectivement à un élément récepteur solidaire du véhicule, ladite structure d'accueil étant montée basculante autour d'un axe passant par les au moins deux moyens d'accroche pour permettre des opérations d'ouverture ou de fermeture dudit dispositif, qui se caractérise en ce que ledit dispositif est tel que décrit précédemment et/ou monté par accrochage sous la caisse du véhicule selon le procédé de montage décrit ci-dessus.

De préférence le dispositif de fixation se monte sous le plancher du véhicule, en le solidarisant à un élément de la caisse du véhicule.

Selon un cas particulier, l'élément récepteur respectif d'un dit moyen d'accroche de ladite structure filaire est un anneau, et de préférence de forme allongée verticalement.

En outre et de préférence le dispositif de fixation comprend un élément de retenue coopérant avec un élément de fermeture solidaire de la caisse du véhicule.

D'autres particularités et avantages de l'invention ressortiront à la lecture de la description faite ci-après d'un mode de réalisation de l'invention, à titre indicatif mais non limitatif, en référence aux figures annexées et pour lesquelles :
- la figure 1 illustre schématiquement; suivant une vue en perspective, un dispositif de fixation selon l'invention solidarisé à un support, élément de caisse d'un véhicule automobile ;
- la figure 1A illustre en gros plan selon une vue en perspective un des moyens d'accroche du dispositif de la figure 1 solidarisé à un élément récepteur du support;
- la figure 1B illustre en gros plan selon une vue en perspective un autre des moyens d'accroche du dispositif de la figure 1 solidarisé à un autre élément récepteur du support;
- les figures 2A à 2I illustrent par vues successives les étapes du procédé de montage des moyens d'accroche du dispositif de fixation illustré en figure 1.

Dans la suite de la description, il est fait référence à un repère XYZ, dans lequel X est la direction longitudinale avant-arrière du véhicule, orientée vers l'arrière, Y est la direction transversale orientée vers la droite du véhicule, et Z est la direction verticale orientée vers le haut du véhicule.

Des références identiques pourront être utilisées d'une figure à l'autre pour désigner des éléments identiques ou similaires.

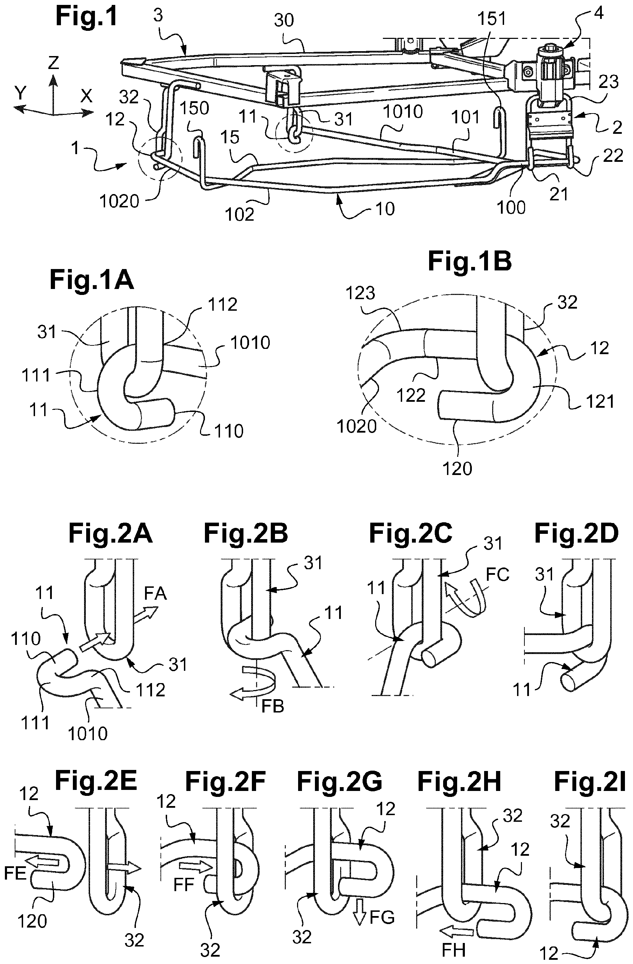

La figure 1 illustre, selon une vue en perspective, un ensemble de rangement pour une roue de secours d'un véhicule automobile selon l'exemple, ledit ensemble comprenant un dispositif de fixation 1 selon l'invention solidarisé à un support 3. Ledit support 3 est solidaire de la de caisse d'un véhicule automobile, plus particulièrement est un élément du soubassement dudit véhicule, et est accessible extérieurement sous le véhicule.

Ledit support 3 est composé d'un élément de la structure de caisse qui a une forme de cadre 30 auquel sont solidarisés des éléments récepteurs 31, 32 dudit dispositif de fixation, ces éléments récepteurs étant configurés selon l'exemple non limitatif en forme d'anneau 31, 32.
Le dispositif de fixation d'une roue de secours selon l'invention présente une structure filaire dite de panier. Cette structure filaire est composée d'un premier fil 10 plié sensiblement en forme de U, de sorte que les extrémités des branches soient globalement orientées longitudinalement et de préférence vers l'avant du véhicule, et d'un deuxième fil 15 disposé sensiblement transversalement et soudé sous ledit premier fil 10 et se terminant en chacune de ses extrémités par un crochet simple s'orientant dans le plan vertical (direction Z) lors de la fermeture dudit panier sur ledit support 3.

Cet ensemble forme ainsi une structure d'accueil de la roue de secours, cette dernière venant reposer sur les fils croisés 10, 15 qui forment un panier par leur croisement. Ledit premier fil 10, plié sensiblement en forme de U, comprend deux moyens d'accroche 11, 12 présents respectivement en terminaison des extrémités des branches du U et aptes à coopérer avec les éléments récepteurs solidaires du cadre de support 30. Lesdits moyens d'accroche 11, 12 viennent s'accrocher respectivement dans un élément récepteur 31, 32 dédié du support 3. Chaque élément récepteur d'un moyen d'accroche se présente, selon l'exemple et avantageusement sous forme d'un anneau récepteur 31, 32 solidarisé audit cadre 30 de manière à être disposé en bas du cadre 30 et orienté sensiblement dans un plan orthogonal au plan moyen défini par ledit cadre 30 qui est sensiblement horizontal. Cet anneau a de préférence mais non limitativement une forme allongée dans le plan vertical (direction Z).

Le dispositif de fixation 1 est ainsi apte à basculer autour de l'axe passant par les au moins deux éléments d'accroche 11, 12. Cet axe de rotation permet de passer le dispositif de fixation selon l'invention d'une position d'ouverture correspondant à un premier état de manutention, sensiblement vertical dans lequel le dispositif est uniquement relié au support 3 du véhicule par cet axe de rotation et dans lequel la roue peut être montée et retirée sur la structure d'accueil du dispositif, à une position de fermeture correspondant à un deuxième état de stockage de la roue, la roue et la structure d'accueil étant alors disposées sensiblement horizontalement, dans lequel la partie transverse du U 100 dudit premier fil 10 du dispositif de fixation 1 est rendue solidaire du support 3 du véhicule par l'intermédiaire de moyens de fermeture 4.
Plus spécifiquement selon l'exemple non limitatif, l'extrémité arrière dudit dispositif de fixation 1 comprend de manière connue en soi, un élément de retenue 2 monté mobile en rotation autour de la partie transverse 100 du U dudit premier fil 10, selon deux crochets 21, 22 refermés autour de ladite partie transverse 100 du fil formant un axe de rotation. Ledit élément de retenue 2 vient s'accrocher par une boucle 23 dans la gorge de moyens complémentaires de fermeture 4 connus en soi, fixés au support du véhicule 3.

Lesdits moyens d'accroche du premier fil 10 plié globalement en forme de U, se présentent sous forme respectivement d'un premier crochet 11 et d'un deuxième crochet 12, et dont la forme du premier diffère de la forme du deuxième. Ces crochets sont respectivement illustrés en gros plan selon une vue en perspective aux figures 1A et 1B.

Le premier moyen d'accroche 11 illustré en figure 1A, accroché à son anneau récepteur 31, se présente sous forme d'un crochet constitué d'une succession de portions qui, dans l'ordre depuis la terminaison dudit crochet, comprend une portion terminale rectiligne 110, une première portion courbe 111 immédiatement adjacente à une deuxième portion courbe 112, cette dernière formant un coude dans le prolongement de la partie rectiligne extrême 1010 de ladite première branche 101 du U.

Le deuxième moyen d'accroche 12 illustré en figure 1B accroché à son anneau récepteur 32, se présente sous forme d'un crochet constitué d'une succession de portions qui, dans l'ordre depuis la terminaison dudit crochet, comprend une portion terminale rectiligne 120, une première portion courbe 121, une portion rectiligne 122 et une deuxième portion courbe 123, cette dernière formant un coude dans le prolongement de la partie rectiligne extrême 1020 de ladite autre branche 102 du U.

Les figures 2A à 2I montrent les différentes étapes d'accrochage au support 3, des moyens d'accroche principaux 11, 12 du dispositif de fixation 1 par accrochage du premier moyen d'accroche 11 selon les figures 2A à 2D puis par accrochage du deuxième moyen d'accroche 12 selon les figures 2E à 2I.

Selon l'invention, le premier moyen d'accroche 11 comprenant deux portions en courbe successives 111, 112 doit être accroché en premier au support. Les figures 2A à 2D illustrent les étapes de cet accrochage dans l'anneau récepteur 31 du support 3.
La portion rectiligne terminale 110 du crochet 11 qui forme le premier moyen d'accroche, est introduite dans l'anneau récepteur 31 selon la flèche droite FA représentée en Figure 2A, pour amener ledit premier crochet en position à plat, dans un plan sensiblement horizontal et donc perpendiculaire au plan vertical de l'anneau, selon la position illustrée en figure 1B.
Ensuite ledit premier crochet 11 est pivoté dans l'anneau 31 en enroulant la première portion de courbe 111 dudit crochet autour d'un axe vertical (direction Z) formé par une partie de pourtour verticale de la partie inférieure de l'anneau, suivant une rotation à 180 degrés environ, selon la flèche FB indiquée en Figure 2B, pour amener le crochet 11 dans le sens opposé, le crochet étant toujours à plat (plan horizontal), selon la position illustrée en figure 2C.
A l'étape suivante, ledit premier crochet 11 est à nouveau pivoté dans l'anneau 31 suivant la deuxième portion de courbe 112 dudit crochet autour d'un axe globalement horizontal formé par une partie transversale, sensiblement courbe, de la partie inférieure de l'anneau récepteur 31, suivant une rotation d'environ 90 degrés, selon la flèche FC indiquée en Figure 2C. Ladite première portion de courbe 111 est ainsi entraînée suivant le contour courbe de l'anneau 31, de sorte que ledit crochet 11 pivote dans l'anneau pour être amené en position verticale (direction Z), c'est-à-dire que le plan défini par ledit crochet se trouve dans un plan sensiblement vertical et parallèle au plan vertical de l'anneau, selon la position illustrée en figure 2D. amenant la portion rectiligne du crochet vers le bas, la branche du U se trouvant dans un plan sensiblement à plat. Ceci permet à la structure filaire du panier de se positionner dans un plan sensiblement horizontal en position de fermeture.

Suite à l'accrochage du premier moyen d'accroche 11 comprenant deux portions en courbe successives, le deuxième moyen d'accroche 12 est accroché au support 3. Les figures 2E à 2I illustrent les étapes de l'accrochage du deuxième crochet 12 qui forme ledit deuxième moyen d'accroche, dans l'anneau récepteur dédié 32 solidaire du support 3.
Ledit deuxième crochet 12 composé successivement d'une portion terminale rectiligne 120, d'une première portion courbe 121, et d'une portion rectiligne 122, est enfilé dans l'anneau récepteur 32 en le positionnant face à l'orifice dudit anneau 32 (figure 2E), grâce à la flexibilité de la structure filaire du dispositif, notamment à la déformation élastique que présente au moins ledit premier fil 10 du dispositif permettant une rétractation illustrée par la flèche FE. Plus généralement la structure filaire du panier de roue se déforme grâce à l'élasticité de la matière qui la compose. Le plan défini par ledit deuxième crochet 12 est alors vertical mais positionné orthogonalement au plan vertical défini par l'anneau récepteur 32. Puis ledit deuxième crochet 12 est poussé dans l'anneau selon la flèche droite FF représentée sur la figure 2F, pour être entièrement introduit dans l'anneau récepteur jusqu'à ce que l'extrémité de la portion rectiligne terminale 120 dudit crochet 12 se situe au-delà du contour de l'anneau récepteur 32, et sans aller au-delà de la portion en coude 123. Ledit crochet 12 se trouve ainsi dans la position illustrée en figure 2G, le plan défini par le crochet restant dans le plan vertical orthogonal au plan vertical défini par l'anneau récepteur 32.
Ledit deuxième crochet 12 est ensuite déplacé en translation verticale et vers le bas dans l'anneau selon la flèche FG, soit en amenant l'intérieur dudit crochet contre la partie courbe intérieure inférieure de l'anneau 32 (position illustrée en figure 2H), puis ledit deuxième crochet est ramené vers l'anneau selon la flèche droite FH représentée sur la figure 2H, soit dans le sens inverse de la poussée illustrée par la flèche FF, de sorte que ledit deuxième crochet 12 s'accroche à l'anneau récepteur 32, en particulier par sa portion courbe 121 enroulée sur le contour de l'anneau 32, comme illustré en figure 2I. Lorsque la pression sur la structure filaire est relâchée, le panier prend naturellement sa position définitive (figure 1).

Il est ainsi impossible de désolidariser le panier de son support sous la caisse du véhicule lorsque le véhicule est sur ses roues. En effet, le premier moyen d'accroche est configuré et dimensionné de façon à ne pas pouvoir passer dans son anneau récepteur autrement qu'en effectuant le mouvement décrit précédemment. De plus, ce montage permet de limiter les mouvements du panier lorsque celui-ci est vidé de sa roue de secours, et donc de réduire le bruit du panier de roue lorsque le véhicule roule le panier vide (sans la roue de secours). De plus ce montage est facile à réaliser pour un opérateur et ne nécessite pas de pièce rapportée ni d'outil spécifique.

La structure générale du dispositif de fixation, et notamment la répartition des fils formant cette structure, ou l'emplacement des moyens de retenue, a été donnée à titre d'exemple non limitatif de l'invention, et peut sensiblement différer sans sortir du contexte de l'invention, dans la mesure où elle présente au moins les deux terminaisons en crochets 11, 12 adaptés selon l'invention pour s'accrocher notamment sous la caisse du véhicule.

## Revendications

1. Dispositif de fixation (1) d'une roue de secours d'un véhicule automobile, apte à se solidariser à la caisse du véhicule, comportant une structure filaire d'accueil de la roue munie d'au moins deux moyens d'accroche (11, 12) aptes à s'accrocher respectivement à un élément récepteur (31, 32) solidaire du véhicule pour le montage basculant de ladite structure filaire autour d'un axe passant par les au moins deux moyens d'accroche permettant des opérations d'ouverture ou de fermeture dudit dispositif, ladite structure filaire comprenant au moins un fil sensiblement en forme de U (10) dont les deux extrémités (1010, 1020) sont prolongées respectivement par lesdits moyens d'accroche (11, 12), et lesdits moyens d'accroche se présentant sous forme respectivement d'un premier crochet (11) et d'un deuxième crochet (12) de formes distinctes l'une de l'autre, **caractérisé en ce que** lesdits crochets (11, 12) sont configurés et dimensionnés de façon à ce que ladite structure filaire ne puisse être montée qu'en accrochant ledit premier crochet (11) en premier puis ledit deuxième crochet (12), et qu'au moins ledit fil en U (10) de ladite structure filaire est élastiquement déformable pour permettre l'accrochage dudit deuxième crochet (12).

2. Dispositif selon la revendication 1, **caractérisé en ce que** ledit premier crochet (11) est configuré et dimensionné de façon à ce que ledit premier crochet (11) s'accroche à son élément récepteur (31) en lui faisant effectuer une rotation à 180 degrés autour d'un axe sensiblement vertical suivie d'une rotation à 90 degrés selon un axe sensiblement horizontal.

3. Dispositif selon la revendication 2, **caractérisé en ce que** ledit premier moyen d'accroche (11) comprend une première portion courbe (111) et une deuxième portion courbe (112), lesdites portions courbes étant orientées suivant des plans sensiblement perpendiculaires entre eux, ladite première portion courbe (111) permettant la rotation d'environ 180 degrés dudit premier crochet autour d'un axe sensiblement vertical formé par une portion de contour de l'élément récepteur (31) solidaire du véhicule, et ladite deuxième portion courbe (112) permettant la rotation d'environ 90 degrés dudit premier crochet (11) autour d'un axe sensiblement horizontal formé par une portion de contour de l'élément récepteur (31) solidaire du véhicule.

4. Dispositif selon la revendication 3, **caractérisé en ce que** ledit premier moyen d'accroche (11) comprend successivement, en partant de l'extrémité dudit crochet qu'il forme, une portion terminale rectiligne (110), ladite première portion courbe (111) puis ladite deuxième portion courbe (112), cette dernière formant un coude dans le prolongement de l'extrémité (1010) d'une première branche (101) dudit fil (10) en U.

5. Dispositif selon l'une des revendications 1 à 4, **caractérisé en ce que** ledit deuxième moyen d'accroche (12) comprend successivement, en partant de l'extrémité dudit crochet qu'il forme, une portion terminale rectiligne (120), une première portion courbe (121), une portion rectiligne (122), puis une deuxième portion courbe (123), cette dernière formant un coude dans le prolongement de l'extrémité (1020) de la deuxième branche (102) dudit fil en U.

6. Dispositif selon l'une des revendications 1 à 5, **caractérisé en ce que** ledit premier moyen d'accroche (11) est formé par une partie recourbée de fil en une extrémité dudit fil en U de ladite structure filaire et ledit deuxième moyen d'accroche (12) est formé par une autre partie recourbée en l'autre extrémité dudit fil en U.

7. Procédé de montage d'un dispositif de fixation (1) d'une roue de secours d'un véhicule automobile en le solidarisant à la caisse du véhicule, ledit dispositif comportant une structure filaire d'accueil de la roue munie d'au moins deux moyens d'accroche (11, 12) s'accrochant respectivement à un élément récepteur (31, 32) solidaire du véhicule rendant basculante ladite structure filaire autour d'un axe passant par les au moins deux moyens d'accroche pour permettre des opérations d'ouverture ou de fermeture dudit dispositif, dans lequel on utilise un dispositif de fixation de roue défini à l'une des revendications 1 à 6, et dans une étape, ledit premier moyen d'accroche (11) est accroché à son élément récepteur respectif (31) en lui faisant effectuer une rotation à 180 degrés autour d'un axe sensiblement vertical, formé par le pourtour vertical de la partie inférieure de son élément récepteur (31), puis une rotation à 90 degrés selon un axe sensiblement horizontal, formé par une portion de contour dudit élément récepteur (31), et dans une étape suivante ledit deuxième moyen d'accroche (12) est accroché à son élément récepteur respectif (32) grâce à la déformation élastique d'au moins le fil en U de la structure filaire dudit dispositif.

8. Procédé de montage selon la revendication 7, dans lequel ledit deuxième moyen d'accroche (12) est accroché en fléchissant au moins ledit fil en U (10) de la structure filaire au moins au niveau dudit deuxième moyen d'accroche (12), puis en introduisant ledit deuxième moyen d'accroche (12) dans son élément récepteur (32), puis en le déplaçant suivant une translation verticale et vers le bas dans ledit élément récepteur (32), de sorte que ledit deuxième moyen d'accroche vient s'accrocher audit élément récepteur (32).

9. Véhicule automobile comprenant un dispositif de fixation (1) d'une roue de secours solidarisé à la caisse dudit véhicule, comportant une structure filaire d'accueil de la roue munie d'au moins deux moyens d'accroche (11, 12) accrochés respectivement à un élément récepteur (31, 32) solidaire du véhicule, ladite structure d'accueil étant montée basculante autour d'un axe passant par les au moins deux moyens d'accroche (11, 12) pour permettre des opérations d'ouverture ou de fermeture dudit dispositif, **caractérisé en ce que** ledit dispositif est défini à l'une des revendications 1 à 6 et/ou monté par accrochage sous la caisse du véhicule selon le procédé de montage décrit à l'une des revendications 7 à 8.

10. Véhicule automobile selon la revendication 9, **caractérisé en ce que** l'élément récepteur (31, 32) respectif d'un dit moyen d'accroche (11, 12) de ladite structure filaire est un anneau, et de préférence de forme allongée verticalement.

## Patentansprüche

1. Vorrichtung zur Befestigung (1) eines Reserverades eines Kraftfahrzeugs, welche geeignet ist, mit der Karosserie des Fahrzeugs fest verbunden zu werden, welche eine Drahtstruktur zur Aufnahme des Rades aufweist, die mit wenigstens zwei Einhakmitteln (11, 12) versehen ist, die geeignet sind, jeweils an einem mit dem Fahrzeug fest verbundenen Aufnahmeelement (31, 32) eingehakt zu werden, zur um eine schwenkbaren Anbringung der Drahtstruktur, welche Arbeitsvorgänge des Öffnens oder Schließens der Vorrichtung ermöglicht, wobei die Drahtstruktur wenigstens einen im Wesentlichen U-förmigen Draht (10) umfasst, dessen zwei Enden (1010, 1020) jeweils durch eines der Einhakmittel (11, 12) verlängert sind, und wobei die Einhakmittel die Form eines ersten Hakens (11) bzw. eines zweiten Hakens (12) mit voneinander verschiedenen Formen aufweisen, **dadurch gekennzeichnet, dass** die Haken (11, 12) derart gestaltet und bemessen sind, dass die Drahtstruktur nur angebracht werden kann, indem zuerst der erste Haken (11) und danach der zweite Haken (12) eingehakt wird, und dass wenigstens der U-förmige Draht (10) der Drahtstruktur elastisch verformbar ist, um das Einhaken des zweiten Hakens (12) zu ermöglichen.

2. Vorrichtung nach Anspruch 1, **dadurch gekennzeichnet, dass** der erste Haken (11) derart gestaltet und bemessen ist, dass der erste Haken (11) an seinem Aufnahmeelement (31) eingehakt wird, indem bewirkt wird, dass er eine Drehung um 180 Grad um eine im Wesentlichen vertikale Achse ausführt, gefolgt von einer Drehung um 90 Grad in Bezug auf eine im Wesentlichen horizontale Achse.

3. Vorrichtung nach Anspruch 2, **dadurch gekennzeichnet, dass** das erste Einhakmittel (11) einen ersten gekrümmten Abschnitt (111) und einen zweiten gekrümmten Abschnitt (112) aufweist, wobei die gekrümmten Abschnitte entlang von Ebenen ausgerichtet sind, die im Wesentlichen zueinander senkrecht sind, wobei der erste gekrümmte Abschnitt (111) die Drehung von ungefähr 180 Grad des ersten Hakens um eine im Wesentlichen vertikale Achse ermöglicht, die von einem Konturabschnitt des mit dem Fahrzeug fest verbundenen Aufnahmeelements (31) gebildet wird, und wobei der zweite gekrümmte Abschnitt (112) die Drehung von ungefähr 90 Grad des ersten Hakens (11) um eine im Wesentlichen horizontale Achse ermöglicht, die von einem Konturabschnitt des mit dem Fahrzeug fest verbundenen Aufnahmeelements (31) gebildet wird.

4. Vorrichtung nach Anspruch 3, **dadurch gekennzeichnet, dass** das erste Einhakmittel (11) nacheinander, beginnend am Ende des Hakens, den es bildet, einen geraden Endabschnitt (110), den ersten gekrümmten Abschnitt (111) und dann den zweiten gekrümmten Abschnitt (112) umfasst, wobei dieser Letztere einen Winkel in der Verlängerung des Endes (1010) eines ersten Schenkels (101) des U-förmigen Drahtes (10) bildet.

5. Vorrichtung nach einem der Ansprüche 1 bis 4, **dadurch gekennzeichnet, dass** das zweite Einhakmittel (12) nacheinander, beginnend am Ende des Hakens, den es bildet, einen geraden Endabschnitt (120), einen ersten gekrümmten Abschnitt (121), einen geraden Abschnitt (122) und dann einen zweiten gekrümmten Abschnitt (123) umfasst, wobei dieser Letztere einen Winkel in der Verlängerung des Endes (1020) des zweiten Schenkels (102) des U-förmigen Drahtes bildet.

6. Vorrichtung nach einem der Ansprüche 1 bis 5, **dadurch gekennzeichnet, dass** das erste Einhakmittel (11) von einem gebogenen Drahtteil an einem Ende des U-förmigen Drahtes der Drahtstruktur gebildet wird und das zweite Einhakmittel (12) von einem anderen gebogenen Teil am anderen Ende des U-förmigen Drahtes gebildet wird.

7. Verfahren zur Montage einer Vorrichtung zur Befestigung (1) eines Reserverades eines Kraftfahrzeugs durch festes Verbinden derselben mit der Karosserie des Fahrzeugs, wobei die Vorrichtung eine Drahtstruktur zur Aufnahme des Rades aufweist, die mit wenigstens zwei Einhakmitteln (11, 12) versehen ist, die jeweils an einem mit dem Fahrzeug fest verbundenen Aufnahmeelement (31, 32) eingehakt werden, wodurch bewirkt wird, dass die Drahtstruktur um eine durch die wenigstens zwei Einhakmittel verlaufende Achse schwenkbar ist, um Arbeitsvorgänge des Öffnens oder Schließens der Vorrichtung zu ermöglichen, wobei eine Vorrichtung zur Befestigung eines Rades verwendet wird, die in einem der Ansprüche 1 bis 6 definiert ist, und in einem Schritt das erste Einhakmittel (11) an seinem jeweiligen Aufnahmemittel (31) eingehakt wird, indem bewirkt wird, dass es eine Drehung um 180 Grad um eine im Wesentlichen vertikale Achse ausführt, die von dem vertikalen äußeren Umfang des unteren Teils seines Aufnahmeelements (31) gebildet wird, danach eine Drehung um 90 Grad in Bezug auf eine im Wesentlichen horizontale Achse, die von einem Konturabschnitt des Aufnahmeelements (31) gebildet wird, und in einem folgenden Schritt das zweite Einhakmittel (12) an seinem jeweiligen Aufnahmemittel (32) dank der elastischen Verformung wenigstens des U-förmige Drahtes der Drahtstruktur der Vorrichtung eingehakt wird.

8. Verfahren zur Montage nach Anspruch 7, wobei das zweite Einhakmittel (12) eingehakt wird, indem wenigstens der U-förmige Draht (10) der Drahtstruktur wenigstens an dem zweiten Einhakmittel (12) gebogen wird, indem danach das zweite Einhakmittel (12) in sein Aufnahmeelement (32) eingeführt wird und indem es danach gemäß einer vertikalen Translation und nach unten in das Aufnahmeelement (32) verlagert wird, so dass sich das zweite Einhakmittel an dem Aufnahmeelement (32) einhakt.

9. Kraftfahrzeug, welches eine mit der Karosserie des Fahrzeugs fest verbundene Vorrichtung zur Befestigung (1) eines Reserverades umfasst, die eine Drahtstruktur zur Aufnahme des Rades aufweist, die mit wenigstens zwei Einhakmitteln (11, 12) versehen ist, die jeweils an einem mit dem Fahrzeug fest verbundenen Aufnahmeelement (31, 32) eingehakt sind, wobei die Aufnahmestruktur schwenkbar um eine durch die wenigstens zwei Einhakmittel (11, 12) verlaufende Achse angebracht ist, um Arbeitsvorgänge des Öffnens oder Schließens der Vorrichtung zu ermöglichen, **dadurch gekennzeichnet, dass** die Vorrichtung in einem der Ansprüche 1 bis 6 definiert ist und/oder durch Einhaken unter der Karosserie des Fahrzeugs gemäß dem in einem der Ansprüche 7 bis 8 beschriebenen Verfahren zur Montage angebracht wird.

10. Kraftfahrzeug nach Anspruch 9, **dadurch gekennzeichnet, dass** das jeweilige Aufnahmeelement (31, 32) eines besagten Einhakmittels (11, 12) der Drahtstruktur ein Ring und vorzugsweise von vertikal lang gestreckter Form ist.

## Claims

1. Motor vehicle spare wheel fastening device (1) that can be secured to the body of the vehicle, comprising a wheel-accommodating wire structure provided with at least two coupling means (11, 12) that can be respectively coupled to a receiving element (31, 32) secured to the vehicle for the tiltable mounting of said wire structure about an axis passing through the at least two coupling means, allowing opening or closing operations of said device, said wire structure comprising at least one substantially U-shaped wire (10) whose two ends (1010, 1020) are respectively extended by said coupling means (11, 12), and said coupling means taking the respective form of a first hook (11) and of a second hook (12) of mutually different shapes, **characterized in that** said hooks (11, 12) are configured and dimensioned such that said wire structure can be mounted only by coupling said first hook (11) first and then said second hook (12), and such that at least said U-shaped wire (10) of said wire structure is elastically deformable to allow the coupling of said second hook (12).

2. Device according to Claim 1, **characterized in that** said first hook (11) is configured and dimensioned such that said first hook (11) is coupled to its receiving element (31) by causing it to carry out a rotation through 180 degrees about a substantially vertical axis followed by a rotation through 90 degrees about a substantially horizontal axis.

3. Device according to Claim 2, **characterized in that** said first coupling means (11) comprises a first curved portion (111) and a second curved portion (112), said curved portions being oriented in planes which are substantially perpendicular to one another, said first curved portion (111) allowing the rotation of approximately 180 degrees of said first hook about a substantially vertical axis formed by a contour portion of the receiving element (31) secured to the vehicle, and said second curved portion (112) allowing the rotation of approximately 90 degrees of said first hook (11) about a substantially horizontal axis formed by a contour portion of the receiving element (31) secured to the vehicle.

4. Device according to Claim 3, **characterized in that** said first coupling means (11) successively comprises, starting from the end of said hook that it forms, a rectilinear terminal portion (110), said first curved portion (111) and then said second curved portion (112), the latter forming an elbow in the extension of the end (1010) of a first branch (101) of said U-shaped wire (10).

5. Device according to one of Claims 1 to 4, **characterized in that** said second coupling means (12) successively comprises, starting from the end of said hook that it forms, a rectilinear terminal portion (120), a first curved portion (121), a rectilinear portion (122), then a second curved portion (123), the latter forming an elbow in the extension of the end (1020) of the second branch (102) of said U-shaped wire.

6. Device according to one of Claims 1 to 5, **characterized in that** said first coupling means (11) is formed by a bent wire part at one end of said U-shaped wire of said wire structure, and said second coupling means (12) is formed by another bent part at the other end of said U-shaped wire.

7. Method for mounting a motor vehicle spare wheel fastening device (1) by securing it to the body of the vehicle, said device comprising a wheel-accommodating wire structure provided with at least two coupling means (11, 12) respectively coupling to a receiving element (31, 32) secured to the vehicle, rendering said wire structure tiltable about an axis passing through the at least two coupling means to allow opening or closing operations of said device, in which method use is made of a wheel fastening device defined in one of Claims 1 to 6, and, in one step, said first coupling means (11) is coupled to its respective receiving element (31) by causing it to carry out a rotation through 180 degrees about a substantially vertical axis, which is formed by the vertical periphery of the lower part of its receiving element (31), then a rotation through 90 degrees about a substantially horizontal axis, which is formed by a contour portion of said receiving element (31), and, in a subsequent step, said second coupling means (12) is coupled to its respective receiving element (32) by virtue of the elastic deformation of at least the U-shaped wire of the wire structure of said device.

8. Mounting method according to Claim 7, in which said second coupling means (12) is coupled by flexing at least said U-shaped wire (10) of the wire structure at least at said second coupling means (12), then by introducing said second coupling means (12) into its receiving element (32), then by moving it with a vertically downward translational movement in said receiving element (32), with the result that said second coupling means is coupled to said receiving element (32).

9. Motor vehicle comprising a spare wheel fastening device (1) secured to the body of said vehicle, comprising a wheel-accommodating wire structure provided with at least two coupling means (11, 12) respectively coupled to a receiving element (31, 32) secured to the vehicle, said accommodating structure being tiltably mounted about an axis passing through the at least two coupling means (11, 12) to allow opening or closing operations of said device, **characterized in that** said device is defined in one of Claims 1 to 6 and/or mounted by coupling below the body of the vehicle using the mounting method described in either of Claims 7 and 8.

10. Motor vehicle according to Claim 9, **characterized in that** the respective receiving element (31, 32) of a said coupling means (11, 12) of said wire structure is a ring, and preferably a ring of vertically elongate shape.
